# EUROPÄISCHE PATENTSCHRIFT

(11) **EP 0 875 274 B1**
(45) Veröffentlichungstag und Bekanntmachung des Hinweises auf die Patenterteilung: **03.09.2003**
(21) Anmeldenummer: 98106245.8
(22) Anmeldetag: 06.04.1998
(51) Int. Cl.: B01D 46/04, B01D 50/00, B01D 46/02, B01D 53/83, B01D 53/50, B01D 53/68, B01D 53/64, B01D 53/70, B01D 45/08

(54) **Abgasreinigung und Verfahren zum Betreiben einer solchen Abgasreinigung**
Exhaust gas cleaning and process for conducting such a gas cleaning
Purification de gaz d'échappement et procédé pour conduire une telle purification

(30) Priorität: 08.04.1997 DE 19714337
(43) Veröffentlichungstag der Anmeldung: 04.11.1998
(73) Patentinhaber: GRAF-EPE GmbH, 61381 Friedrichsdorf (DE)
(72) Erfinder: Graf, Rolf Dr., 61381 Friedrichsdorf (DE)
(74) Vertreter: Schlagwein, Udo, Dipl.-Ing.

(56) Entgegenhaltungen:
- EP-A- 0 329 364
- EP-A- 0 399 249
- DE-A- 2 056 096
- DE-A- 2 434 354
- DE-A- 3 827 160
- DE-A- 19 532 862
- DE-C- 3 930 765
- DE-U- 8 602 316
- US-A- 3 876 402
- US-A- 4 264 345

## Beschreibung

Die Erfindung betrifft eine Abgasreinigungsanlage mit einem vom zu reinigenden Gas durchströmten Rückstromwirbler und zumindest einem dem Rückstromwirbler über einen Gaskanal nachgeschalteten, Filterelemente aufweisenden Gewebefilter mit jeweils mindestens einem Gaseinlass, einem Reingaskanal und einem Feststoffbunker und bei der ein Zwischenspeicher zum Speichern der in dem Gewebefilter abgeschiedenen Feststoffe und eine Feststoffrückführung zum Zurückführen der im Zwischenspeicher anfallenden Feststoffe in den Rückstromwirbler vorgesehen ist. Eine solche Vorrichtung ist aus DE 19 532 862 A11 bekannt.

Abgasreinigungen der vorstehenden Art sind insbesondere zur Abscheidung von SOₓ und/oder HCl und/oder HF aus Rauchgasen bekannt und gebräuchlich. Dabei wird mittels des mit zirkulierender Wirbelschicht arbeitenden Rückstromwirblers SOₓ und/oder Chlor an Kalkhydrat oder Kalziumoxid gebunden, welches in ihm als Sorbens zirkuliert. Das mit den Reaktionsprodukten und unreagiertem Kalkhydrat oder Kalziumoxid belastete Rauchgas tritt am Kopfteil des Rückstromwirblers aus und wird in dem nachgeschalteten Staubfilter entstaubt, welches häufig als Gewebefilter ausgebildet ist. Dem Gewebefilter ist ein Zwischenspeicher nachgeschaltet, von dem aus ein Hauptanteil des abgeschiedenen Sorbens wieder dem Rückstromwirbler zugeführt und die restliche Teilmenge mittels eines Überlaufs ausgeschleust wird.

Bei den bekannten Abgasreinigungen führt von dem Rückstromwirbler ein Gaskanal zu dem Gewebefilter. Meist ist für einen Rückstromwirbler ein Gewebefilter mit mehreren separaten Filterkammern vorgesehen. Dann ordnet man diese häufig zu beiden Seiten des Gaskanals hintereinander an. Der Zwischenspeicher ist allen Gewebefiltern gemeinsam und muss relativ großvolumig sein, damit bei allen Betriebszuständen sichergestellt ist, dass für den Rückstromwirbler genügend Sorbens zur Verfügung steht.

Als nachteilig hat sich bei den bekannten Gewebefiltern herausgestellt, dass im rückwärtigen Bereich nur noch relativ feine Partikel abgeschieden werden. Im vorderen Bereich erfolgt die Abscheidung der größeren Partikel, so dass dort die Kapazität des Feststoffbunkers rasch aufgebraucht ist und ein hoher Anteil der groberen Partikel in den Überlauf gelangen und dadurch für die Rezirkulation verloren gehen. Da die Adsorption jedoch an der Oberfläche der Partikel stattfindet, sind gerade die groberen Partikel diejenigen, welche noch für die Schadstoffabscheidung gebraucht werden.

In der Praxis steuert man bei den Gewebefiltern die in ihnen vorgesehene Abreinigung derart, dass die Druckdifferenz der Gewebefilter über alle Betriebsbereiche konstant bleibt. Da der Strömungswiderstand des Filter-Gaskanals, des Gewebes, des Filtergehäuses und anderer mechanischer Einrichtungen jedoch mit abnehmender Rauchgasmenge quadratisch abnimmt, entsteht durch diese Art der Steuerung bei abnehmender Rauchgasmenge eine wesentlich größere Filterbelagsstärke, da dann der Filterbelag durch seine zunehmende Dicke den verringerten Druckverlust in den übrigen Bereichen der Anlage ausgleichen muss. Das hat den Nachteil, dass bei vermindertem Rauchgasdurchsatz zunächst relativ wenig Sorbens dem Zwischenspeicher zugeführt wird und dieser deshalb relativ großvolumig sein muss, damit sein Speichervorrat an Sorbens für den Rückstromwirbler ausreichend ist.

Durch den Zwischenspeicher, die Steuerung der Abreinigung und die Gasführung ist die bekannte Abgasreinigung relativ voluminös, so dass häufig unerwünscht viel Platz für ihre Anordnung benötigt wird. Ein weiterer Nachteil der bisherigen Abgasreinigungen liegt darin, dass es infolge hoher Staubbelastung des dem Gewebefilter zugeführten Gases zu unerwünschten Staubablagerungen im Gewebefilter, insbesondere im Rohgaskanal des Gewebefilters, kommt, durch die oftmals sogar das Verschließen von Absperrklappen unmöglich wird. Hinzu kommt, dass die Kosten für die bekannte Abgasreinigung hoch sind, so dass der Wunsch nach Einsparungen stark ist.

Der Erfindung liegt das Problem zugrunde, eine Abgasreinigung der eingangs genannten Art so auszubilden, dass sie möglichst kompakt ist und kostengünstig hergestellt werden kann, unerwünschte Verluste noch aktiven Sorbens vermieden werden und ein störungsfreier Betrieb mit hoher Verfügbarkeit erreicht wird. Weiterhin soll ein Verfahren zum Betreiben einer solchen Abgasreinigung gefunden werden, durch welches die Einheit aus Rückstromwirbler und Gewebefilter als ganzes möglichst optimal arbeitet.

Das erstgenannte Problem wird erfindungsgemäß dadurch gelöst, dass der Gaseinlass zum Verteilen des Rohgases auf die einzelnen Filterelemente des Gewebefilters zu einem an einer Seite des Gewebefilters seitlich über die gesamte Länge im Gewebefilter und nahezu über die gesamte Höhe der Filterkammer verlaufenden, zum Feststoffbunker hin offenen Strömungsschacht führt und dass der Feststoffbunker des Gewebefilters zugleich den Zwischenspeicher bildet.

Bei einer solchen Abgasreinigung wird durch den Strömungsschacht verhindert, dass die Hauptabscheideleistung im vorderen Filterbereich erfolgt und erreicht, dass sie sich auf die gesamte Filterfläche verteilt. Diese Gestaltung verhindert, dass die gröberen Staubpartikel statt in den Prozess zurückgeführt zu werden, in den Überlauf (Materialaustrag) gelangen und zum großen Teil nicht als Rezirkulat zur Verfügung stehen. Der nach unten hin offene Strömungsschacht sorgt weiterhin dafür, dass Staubablagerungen im Staubfilter und Staubkanal verhindert werden und grobere Partikel bereits allein durch Schwerkraft in den Feststoffbunker gelangen. Die Vermeidung von Staubablagerungen im Gewebefilter ist bei der erfindungsgemäßen Abgasreinigung besonders wichtig, weil bei solchen Anlagen mit Staubbeladungen im dem Gewebefilter zugeführten Rohgas mit 500 bis 2000 g/m³ gefahren wird.

Weiterhin ist die erfindungsgemäße Abgasreinigung besonders kompakt, da der bisher erforderliche Platz für einen zwischen den einzelnen Gewebefiltern verlaufenden Gaskanal reduziert wird. Hinzu kommt, dass auf einen separaten Zwischenspeicher gänzlich verzichtet werden kann. Zugleich lassen sich dadurch einige Fördereinrichtungen für die Rückführung des Sorbens einsparen, da dieses unmittelbar von den Feststoffbunkern der Gewebefilter in den Rückstromwirbler zu gelangen vermag. Da das Rohgas statt in einem separaten Gaskanal durch einen Strömungsschacht im Gewebefilter strömt, werden auch in diesem Bereich Taupunktunterschreitungen vermieden und es kommt zu einer Verbesserung der verfahrenstechnischen Bedingungen. Weiterhin ist bei dem erfindungsgemäßen Gewebefilter durch den innenliegenden Strömungsschacht und der dadurch erreichten geringen Gasgeschwindigkeiten der durch die Gasströmung im Filter ohne Berücksichtigung des Strömungswiderstandes des Filtermediums und des Filterbelags entstehende Strömungswiderstand besonders gering.

Eine zu große Anströmgeschwindigkeit im Bereich der einlassseitigen Filterelemente und damit hoher Verschleiß und hoher Druckverlust in diesem Bereich und ein nicht ausreichendes Absetzen von abgereinigtem Staub lässt sich dadurch vermeiden, dass gemäß einer Weiterbildung der Erfindung der Gaskanal jeweils vom Rückstromwirbler mittels des Gaseinlasses bis nach unten zu der dem Rückstromwirbler zugewandten Stirnseite des Gewebefilters führt und das innenliegende Prallblech dabei mehr als 20% und weniger als 50 % der Länge des Filters (Schläuche) abdecken. Die Abgasreinigung ist optimal bemessen, wenn die Breite des Gaseinlasses mehr als 30% und weniger als 90%, vorzugsweise 50% - 80%, der stirnseitigen Breite des Rohgasraumes des Gewebefilters abdeckt. Die Höhe des Gaseinlasses soll dann mehr als 40% und weniger als 90%, vorzugsweise 70% - 90%, der stirnseitigen Höhe des Rohgasraumes des Gewebefilters abdecken und die maximale Rohgasgeschwindigkeit am Ende des Gaseinlasses bzw. am Eintritt in das Gewebefilter zwischen 1 - 10 m/s, vorzugsweise 1 - 5 m/s betragen. Unter Höhe ist hierbei die Länge der Filterschläuche plus dem Freiraum unterhalb der Filterschläuche bis zum Staubbunker zu verstehen.

Üblicherweise ordnet man vor dem Gewebefilter einen Vorabscheider an, so dass die Filterelemente nur noch eine Teilmenge des Staubes zurückhalten müssen. Ein separater Vorabscheider außerhalb des Gewebefilters wird entbehrlich, wenn der Gaseinlass teilweise bis unterhalb von in dem Gewebefilter angeordneten Filterelementen reicht und wenn in dem Gewebefilter mit Abstand von dem in ihre Stirnseite mündenden Gaskanal ein Prallblech angeordnet ist, welches die dem Gaseinlass zugewandte Stirnseite der Filterelemente abdeckt und einen solchen Querschnitt für das einströmende Gas freilässt, dass der Raum zwischen der Mündung des Gaseinlasses und dem Prallblech einen Schwerkraftabscheider bildet. Durch diese Bauweise entsteht im vordersten Bereich der Gewebefilter jeweils mit einfachsten Mitteln ein Schwerkraftabscheider, von dem aus die von ihm abgeschiedenen Feststoffe in den gleichen Feststoffbunker zu fallen vermögen wie die der Filterelemente. Hierdurch lassen sich in diesem Bereich maximale Gasgeschwindigkeiten von weniger als 1 - 10 m/s erreichen, wodurch sich eine erhebliche Staubvorabscheidung ergibt. Üblicherweise liegen die Gaseintrittsgeschwindigkeiten bei etwa dem zweifachen Wert und dem entsprechend die Druckverluste bei einem Faktor 4. Dabei werden vorzugsweise die gröbsten Staubteile abgeschieden und auf kürzestem Weg über Zwischenspeicher und Rezirkulationsleitungen dem Adsorber (RSW) zur weiteren Nutzung zugeführt. Die reaktionstechnisch noch nicht ausgenutzten Grobanteile (z.B. Kalkhydrat, Aktivkoks) werden dadurch wie gewünscht erheblich mehr als das weiter ausreagierte Feingut dem Adsorber zugeführt.

Für das Verfahren nicht benötigtes Sorbens kann besonders einfach auf gleiche Weise wie bei einem Zwischenspeicher ausgeschleust werden, wenn der Feststoffbunker einen seine maximale Füllhöhe begrenzenden Materialaustrag hat.

Die Abgasreinigung kann zuverlässig vom zu reinigenden Gasstrom abgetrennt werden, wenn gemäß einer anderen Weiterbildung der Erfindung in dem Gaskanal vor dem Gaseinlass unmittelbar hinter dem Rückstromwirbler eine nach oben hin öffnende Absperrklappe und im Reingaskanal außerhalb des Gewebefilters ein weiteres Absperrorgan angeordnet ist, falls das Gewebefilter aus mehreren Einzeleinheiten besteht. Durch die Anordnung der Gasklappe vor dem Gaseinlass ist sichergestellt, dass diese nicht durch Staubablagerungen in ihrer Funktionstüchtigkeit beeinträchtigt wird. Das Absperrorgan im Reingaskanal kann ebenfalls einfach gestaltet sein und ist außerhalb des Gewebefilters zugänglich.

Kältebrücken und dadurch örtliche Taupunktunterschreitungen lassen sich gemäß einer anderen Weiterbildung der Erfindung vermeiden, wenn der Reingaskanal innerhalb des Gehäuses des Gewebefilters von einer Reingaskammer durch eine die Filterelemente aufweisende Rohgaskammer hindurch nach unten aus dem Gehäuse herausführt.

Ein Stillstand der Gesamtanlage zum Zwecke von Filterinspektionen oder -reparaturen kann weitgehend vermieden werden, wenn mehrere Gewebefilter parallel zueinander angeordnet sind und jeweils ein separater Gaskanal von dem Rückstromwirbler herab zu dem jeweiligen Gaseinlass jedes Gewebefilters führt. Man erhält dann die Möglichkeit, ein einzelnes Gewebefilter vom Gasstrom abzutrennen und zu warten, während das andere Gewebefilter weiterarbeitet.

Bei großen Anlagen ist es vorteilhaft, wenn gemäß einer anderen Weiterbildung der Erfindung der Rückstromwirbler an gegenüberliegenden Seiten Auslässe mit jeweils einem zu einem Gewebefilter führenden Gaskanälen hat.

Die zweitgenannte Aufgabe, nämlich die Schaffung eines Verfahrens zum Steuern einer anmeldungsgemäßen Abgasreinigungsanlage, welche eine von einer automatischen Steuerung aktivierbare Abreinigung aufweist, wird erfindungsgemäß dadurch gelöst, dass die Steuerung entsprechend unterschiedlicher, einstellbarer Kennlinien erfolgt, die das Verhältnis zwischen dem Gesamtgasverlust des Gewebefilters und dem Volumenstrom im Gewebefilter wiedergeben.

Hierdurch ist es möglich, die Abgasreinigung den Bedingungen im Rückstromwirbler anzupassen. Wenn beispielsweise bei einem Teillastbetrieb die Absorption im Rückstromwirbler geringer ist, kann man im Gewebefilter größere Staubschichtdicken auf den Elementen entstehen lassen, damit dort eine erhöhte Adsorption eintritt. Der dadurch entstehende höhere Druckverlust in dem Gewebefilter wird dadurch kompensiert oder teilkompensiert, dass bei Teillast im Rückstromwirbler ein geringerer Druckverlust auftritt. Deshalb ist es besonders günstig, wenn das Gewebefilter mit einem bei zunehmendem Volumenstrom abnehmender Feststoff-Druckverlust gefahren wird.

Die erfindungsgemäße Verfahrensweise stellte eine Abkehr von dem bisher bei den meisten Gewebefiltern benutzten Steuerprinzip dar, nach dem man immer die Druckdifferenz konstant gehalten hat. Eine konstante Druckdifferenz führt jedoch dazu, dass bei geringen Gasdurchsätzen, also im Teillastbetrieb, die Filterbelagsstärke zu stark ansteigt und dadurch bei einem Wechsel vom Volllastbetrieb zum Teillastbetrieb zunächst über einen längeren Zeitraum keine Abreinigung der Filterelemente stattfindet. Dadurch fällt auch über einen längeren Zeitraum kein Feststoff in den Feststoffbunker. Er wird vielmehr am Filterschlauch gespeichert, was die Ursache dafür ist, dass ein relativ großvolumiger Zwischenspeicher notwendig wird. Bei dem erfindungsgemäßen Verfahren wird jedoch die Filterbelagsstärke konstant oder entsprechend einer beliebig auf das gesamte Verfahren abgestimmte, einstellbaren Kennlinie gehalten und deshalb dem Prozess stets eine der wechselnden Gasmenge entsprechende Menge an Sorbens zur Verfügung gestellt. Man kann sich daher mit einem wesentlich kleineren Zwischenspeicher begnügen und auf diese Weise einen Nachteil von Gewebefiltern im Vergleich zu Elektrofiltern, bei denen stets in gleichen Zeitabständen abgereinigt wird, beheben. Weiterhin wird die Betriebssicherheit erhöht, da es bei Anwendung der Erfindung nicht mehr vorkommt, dass die Speichermenge im Zwischenspeicher klein ist. Außerdem ist die Produktvorlagemenge, die beim Anfahren der Abgasreinigung einzubringen ist, bei Anwendung der Erfindung erheblich kleiner. Das erfindungsgemäße Verfahren eignet sich auch für Gewebefilter, welche nicht die erfindungsgemäßen Merkmale aufweisen. Durch das Verfahren werden desweiteren Verluste an noch nicht ausreichend ausreagiertem Rezirkulat vermieden, weil bei einer raschen Zunahme des Abgasstromes nicht plötzlich eine große Filterbelagsmenge abgereinigt wird, welche der Feststoffbunker nicht mehr fassen kann. Dadurch kommt es zu einer Einsparung von Frischsorbens und einer einheitlichen Produktqualität.

Die Menge der Abreinigungsluft lässt sich wesentlich vermindern, wenn die Abreinigung der Filterelemente durch Konditionierung der Stäube durch Wassereindüsung im Rückstromwirbler im Bereich der Feststoffzirkulation und gegebenenfalls zusätzliche Konditionierung im Bereich des Wirbelschichteintritts am Konusanfang so verbessert wird, dass die Menge der Abreinigungsdruckluft und/oder des Abreinigungsdruckes um mehr als 10%, vorzugsweise mehr als 20%, reduziert wird.

Die Erfindung lässt zahlreiche Ausführungsformen zu. Zur weiteren Verdeutlichung ihres Grundprinzips wird nachfolgend auf die Zeichnung Bezug genommen. Diese zeigt in
- Fig.1: ein Schema einer Abgasreinigung nach der Erfindung,
- Fig.2: eine Seitenansicht eines Rückstromwirblers mit einem nachgeschalteten Gewebefilter,
- Fig.3: eine Ansicht eines oberen Bereiches des Rückstromwirblers,
- Fig.4: eine gegenüber Fig.3 um 90° gedrehte Ansicht des oberen Bereiches des Rückstromwirblers,
- Fig. 5: einen horizontalen Schnitt durch ein Gewebefilter nach der Erfindung mit vorgeschaltetem Rückstromwirbler (zirkulierende Wirbelschicht),
- Fig.6: eine teilweise geschnittene Seitenansicht des Gewebefilters mit vorgeschaltetem Rückstromwirbler (zirkulierende Wirbelschicht),
- Fig.7: eine teilweise geschnittene Vorderansicht des Gewebefilters.

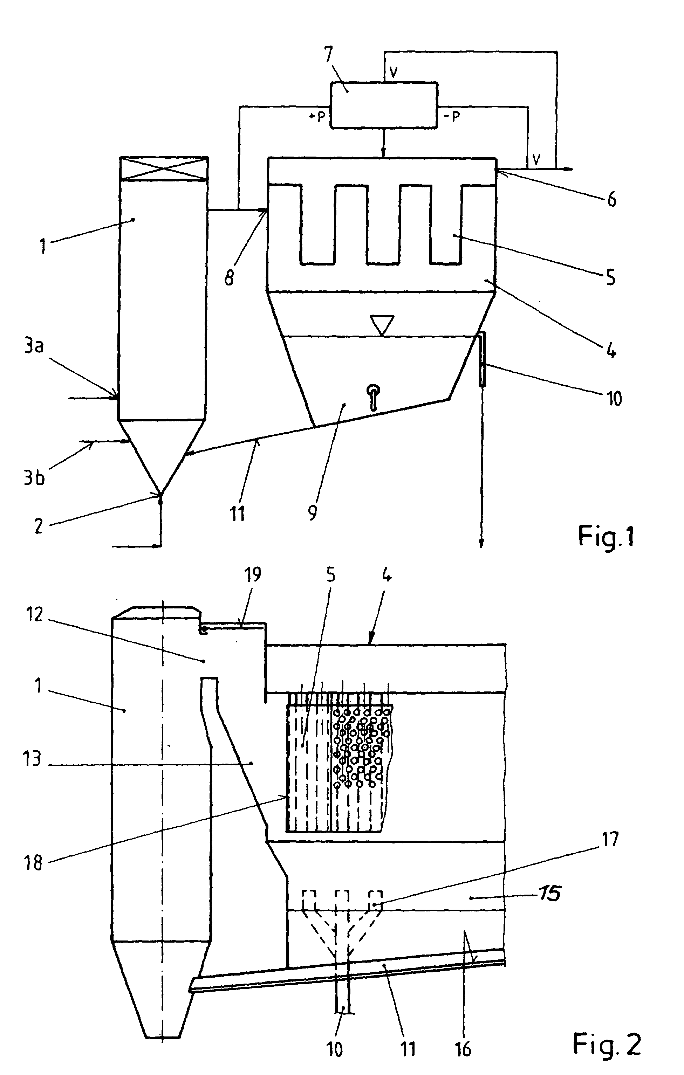

Die Figur 1 zeigt einen Rückstromwirbler 1 bzw. Reaktor mit zirkulierender Wirbelschicht, welcher an seinem unteren Ende einen Rauchgaseinlass 2 und darüber einen Sorbenseinlass 3a sowie eine Wassereindüsung 3b hat. Über diesen Sorbenseinlass 3a wird in den Rückstromwirbler 1 Kalkhydrat oder weitere Sorbenzien (z.B. Aktivkoks) eingegeben, um im Rauchgas vorhandene Schwefelverbindungen (SOₓ, HCl, HF, Dioxine, Furane, Schwermetalle) zu binden.

Das Abgas strömt vom Rückstromwirbler 1 über einen Gaseinlass 8 in ein als Schlauchfilter ausgebildetes Gewebefilter 4, welches einzelne, als Filterschläuche ausgebildete Filterelemente 5 hat, welche von dem mit Feststoffen aus dem Rückstromwirbler 1 beladenen Gas von außen nach innen durchströmt werden, so dass sich außenseitig auf den Filterelementen 5 ein Filterbelag bildet. Das gereinigte Abgas verlässt das Gewebefilter 4 über einen Gasauslass 6.

Oberhalb des Gewebefilters 4 ist eine Steuerung 7 skizziert, welche eine nicht dargestellte Abreinigung der Filterelemente 5 steuert. Diese Abreinigung arbeitet auf übliche Weise dadurch, dass in die Filterelemente 5 Druckluftstöße eingeleitet werden, durch welche der auβenseitige Filterbelag von den Filterelementen 5 herunterfällt. Die Steuerung 7 berücksichtigt Kennlinien, welche das Verhältnis zwischen der Schichtdicke auf den Filterelementen 5 und dem Volumenstrom im Gewebefilter 4 wiedergeben.

Die Figur 1 zeigt zusätzlich einen in das Filter integrierten Zwischenspeicher 9 mit einem Materialaustrag 10. Möglich ist es jedoch auch, einen nicht integrierten und deshalb separaten Zwischenspeicher zu verwenden. In diesem Zwischenspeicher 9 werden die im Gewebefilter 4 abgeschiedenen staubförmigen Feststoffe gesammelt. Der Hauptanteil dieser Feststoffe gelangt über eine Feststoffrückführung 11 zurück in den Rückstromwirbler 1, während eine geringe Teilmenge über den Materialaustrag 10 ausgeschleust wird.

Die Figur 2 zeigt, wie das Abgas vom Rückstromwirbler 1 über einen nach unten gerichteten Gaskanal 12 und einen Gaseinlass 13 in das Gewebefilter 4 gelangt. Dieses Gewebefilter 4 hat an seiner unteren Seite einen Feststoffbunker 15, welcher zugleich die Funktion des in Figur 1 gezeigten Zwischenspeicher 9 hat. Der Feststoffbunker 15 ist mit einem zum Rückstromwirbler 1 hin abfallenden Boden 16 versehen, auf dem die Feststoffrückführung 11 vorgesehen ist. Diese Feststoffrückführung 11 führt unmittelbar in den Rückstromwirbler 1. Ebenfalls dargestellt ist in Figur 2 der Materialaustrag 10, welcher mehrere Einlässe 17 haben kann.

Die Filterelemente 5 sind in dem Gewebefilter 4 hinter einem Prallblech 18 angeordnet, welches senkrecht in dem Gewebefilter 4 mit Abstand von der Mündung des Gaseinlasses 13 verläuft.

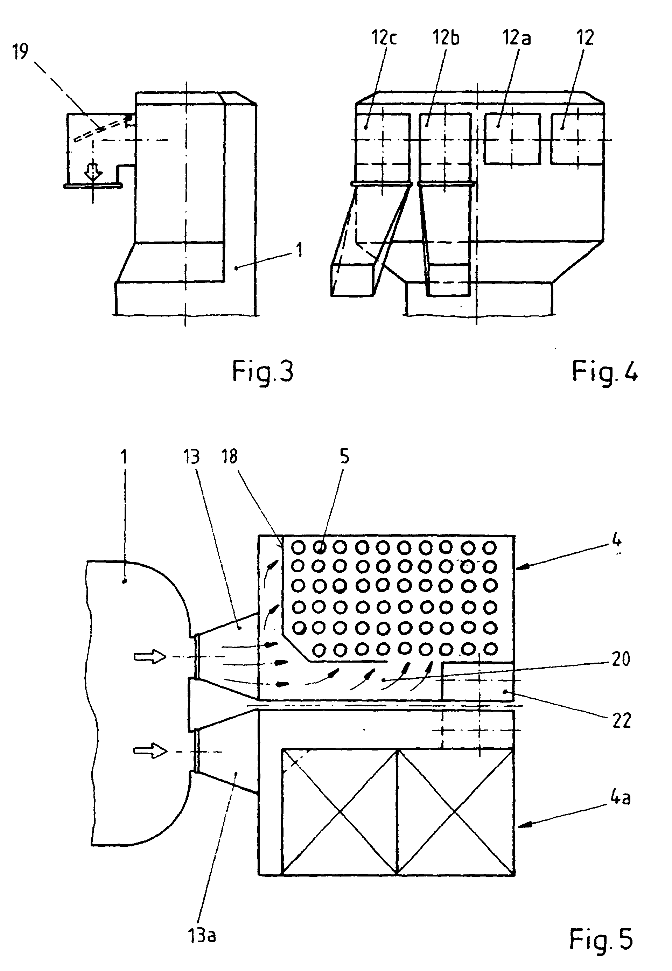

Die Figuren 3 und 4 zeigen den oberen Bereich des Rückstromwirblers 1. Aus diesem führen bei diesem Ausführungsbeispiel insgesamt vier Gaskanäle 12, 12a, 12b, 12c, in denen jeweils eine in den Figuren 2 und 3 dargestellte Absperrklappe 19 derart angeordnet ist, dass sie sich im geöffneten Zustand außerhalb des Gas/Feststoffstromes befindet.

Die Figur 5 zeigt neben dem Rückstromwirbler 1 zwei spiegelbildlich nebeneinander angeordnete Gewebefilter 4, 4a, in welche die Gaseinlässe 13, 13a führen. Zu erkennen ist, dass hinter dem Gaseinlass 13, 13a an einer Seite des Gewebefilters 4, 4a jeweils ein Strömungsschacht 20 über die gesamte Länge des Gewebefilters 4, 4a verläuft, der zu dem in Figur 2 gezeigten Feststoffbunker 15 hin offen ist und das Gas auf die einzelnen Filterelemente 5 verteilt. Weiterhin ist in Figur 5 das Prallblech 18 dargestellt, welches als Lochblech ausgebildet sein kann und verhindert, dass der eintretende Gasstrom mit zu großer Geschwindigkeit gegen die ersten Filterelemente 5 prallt. Wichtig für die Erfindung ist, dass immer nur ein Gaskanal 12 mit einem Gewebefilter 4 verbunden ist. Wenn der Rückstromwirbler 1, wie bei dem gezeigten Beispiel, vier Auslässe hat, dann müssen entsprechend vier Gewebefilter 4 oder vier parallel angeordnete Gewebefilterkammern vorgesehen werden.

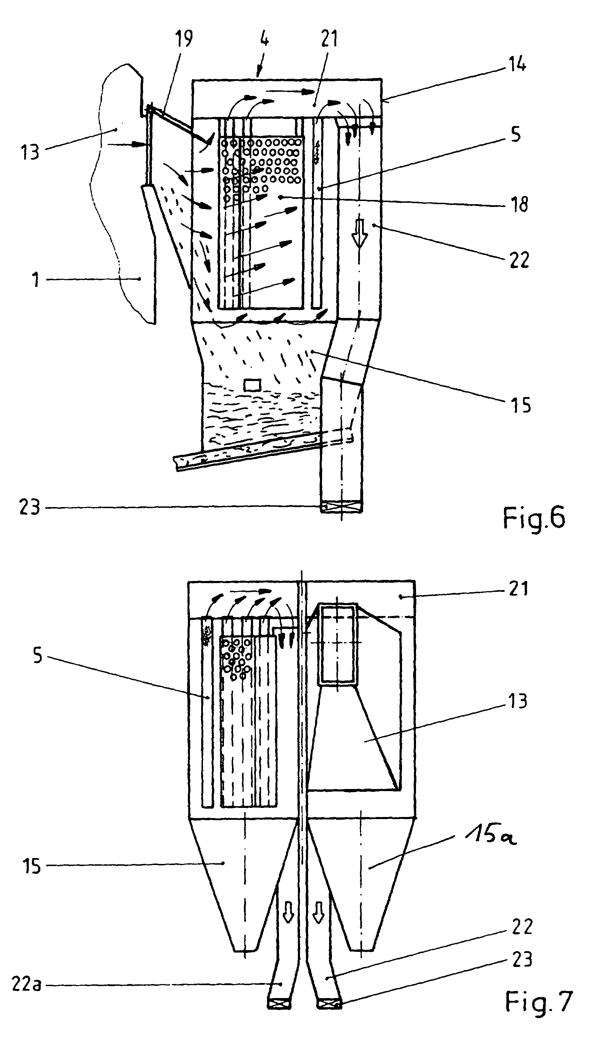

Die Figur 6 zeigt konkreter, wie die Gewebefilter 4 konstruktiv beschaffen sind. Zu sehen sind ein Gehäuse 14, der Gaseinlass 13, das Prallblech 18 und die Filterelemente 5. Weiterhin sieht man den Feststoffbunker 15. Zusätzlich ist zu erkennen, dass das Gewebefilter 4 einen Reingasraum 21 hat, von dem aus ein Reingaskanal 22 innenseitig durch das Gehäuse 14 hindurch nach außen führt. Außerhalb des Gehäuses 14 hat der Reingaskanal 22 ein Absperrorgan 23.

In Figur 7 sind, genau wie in Figur 5, zwei Gewebefilter 4, 4a spiegelbildlich nebeneinander angeordnet dargestellt. Entsprechend sieht man in Figur 7 zwei nebeneinander verlaufende Reingaskanäle 22, 22a und zwei Feststoffbunker 15, 15a.

## Patentansprüche

1. Abgasreinigungsanlage mit einem vom zu reinigenden Gas durchströmten Rückstromwirbler (1) und zumindest einem dem Rückstromwirbler über einen Gaskanal (12) nachgeschalteten, Filterelemente (5) aufweisenden Gewebefilter (4) mit jeweils zumindest einem Gaseinlass (8), einem Reingaskanal (22) und einem Feststoffbunker (15) und bei der ein Zwischenspeicher zum Speichern der in dem Gewebefilter abgeschiedenen Feststoffe und eine Feststoffrückführung (11) zum Zurückführen der im Zwischenspeicher anfallenden Feststoffe in den Rückstromwirbier vorgesehen ist, **dadurch gekennzeichnet, dass** der Gaseinlass (13, 13a ) zum Verteilen des Rohgases auf die einzelnen Filterelemente (5) des Gewebefilters (4) zu einem an einer Seite im Gewebefilter (4) seitlich über die gesamte Länge des Gewebefilters (4) und nahezu über die gesamte Höhe der Filterkammer verlaufenden, zum Feststoffbunker (15) hin offenen Strömungsschacht (20) führt und dass der Feststoffbunker (15) des Gewebefilters (4) zugleich den Zwischenspeicher (9) bildet.

2. Abgasreinigungsanlage nach Anspruch 1, **dadurch gekennzeichnet, dass** der Gaskanal (12) jeweils vom Rückstromwirbier (1) mittels des Gaseinlasses (13) bis nach unten zu der dem Rückstromwirbler (1) zugewandten Stirnseite des Gewebefilters (4) führt und das innenliegende Prallblech (18) dabei mehr als 50% der Länge der Filterelemente (5) (Schläuche) abdeckt.

3. Abgasreinigungsanlage nach den Ansprüchen 1 oder 2, **dadurch gekennzeichnet, dass** die Breite des Gaseinlasses (13) mehr als 30 % und weniger als 90 %, vorzugsweise 50% - 80% der stirnseitigen Breite des Rohgasraumes des Gewebefilters (4) abdeckt.

4. Abgasreinigungsanlage nach zumindest einem der vorangehenden Ansprüche, **dadurch gekennzeichnet, dass** die Höhe des Gaseinlasses (13) mehr als 40% und weniger als 90%, vorzugsweise 70% - 90%, der stirnseitigen Höhe des Rohgasraumes des Gewebefilters (4) abdeckt.

5. Abgasreinigungsanlage nach zumindest einem der vorangehenden Ansprüche, **dadurch gekennzeichnet, dass** der Querschnitt des Gaseinlasses (13) so bemessen ist, dass die maximale Rohgasgeschwindigkeit am Ende des Gaseinlasses (13) bzw. am Eintritt in das Gewebefilter (4) zwischen 1 - 10 m/s, vorzugsweise 1 - 5 m/s, beträgt.

6. Abgasreinigungsanlage nach zumindest einem der vorangehenden Ansprüche, **dadurch gekennzeichnet, dass** der Gaseinlass (13) teilweise bis unterhalb von in dem Gewebefilter (4) angeordneten Filterelementen (5) reicht und dass in dem Gewebefilter (4) mit Abstand von dem in ihre Stirnseite mündenden Gaskanal (12) ein Prallblech (18) angeordnet ist, welches die dem Gaseinlass (13) zugewandte Stirnseite der Filterelemente (5) abdeckt und einen solchen Querschnitt für das einströmende Gas freilässt, dass der Raum zwischen der Mündung des Gaseinlasses (13) und dem Prallblech (18) einen Schwerkraftabscheider bildet.

7. Abgasreinigungsanlage nach zumindest einem der vorangehenden Ansprüche, **dadurch gekennzeichnet, dass** der Feststoffbunker (15) einen seine maximale Füllhöhe begrenzenden Materialaustrag (10) hat.

8. Abgasreinigungsanlage nach zumindest einem der vorangehenden Ansprüche, **dadurch gekennzeichnet, dass** in dem Gaskanal (12) vor dem Gaseinlass (13) unmittelbar hinter dem Rückstromwirbler (1) eine nach oben hin öffnende Absperrklappe (19) und im Reingaskanal (22) außerhalb des Gewebefilters (4) ein weiteres Absperrorgan (23) angeordnet ist, falls das Gewebefilter (4) aus mehreren Einzeleinheiten besteht.

9. Abgasreinigungsanlage nach zumindest einem der vorangehenden Ansprüche, **dadurch gekennzeichnet, dass** der Reingaskanal (22) innerhalb des Gehäuses des Gewebefilters (4) von einer Reingaskammer (21) durch eine die Filterelemente (5) aufweisende Rohgaskammer (24) hindurch nach unten aus dem Gehäuse (14) herausführt.

10. Abgasreinigungsanlage nach zumindest einem der vorangehenden Ansprüche, **dadurch gekennzeichnet, dass** mehrere Gewebefilter (4, 4a) parallel zueinander angeordnet sind und jeweils ein separater Gaskanal (12, 12a, 12b, 12c) von dem Rückstromwirbler (1) herab zu dem jeweiligen Gaseinlass (13, 13a) jedes Gewebefilters (4) führt.

11. Abgasreinigungsanlage nach zumindest einem der vorangehenden Ansprüche, **dadurch gekennzeichnet, dass** der Rückstromwirbler an gegenüberliegenden Seiten Auslässe mit jeweils einem zu einem Gewebefilter (4) führenden Gaskanal (12) hat.

12. Verfahren zum Steuern einer Abgasreinigungsanlage nach mindestens einem der Ansprüche 1-11, welche eine von einer automatischen Steuerung aktivierbare Abreinigung aufweist, **dadurch gekennzeichnet, dass** die Steuerung entsprechend unterschiedlicher, einstellbarer Kennlinien erfolgt, die das Verhältnis zwischen dem Gesamtdruckverlust des Gewebefilters und dem Volumenstrom im Gewebefilter wiedergeben.

13. Verfahren nach Anspruch 12, **dadurch gekennzeichnet, dass** das Gewebefilter mit einem bei zunehmendem Volumenstrom abnehmenden Feststoff-Druckverlust gefahren wird.

14. Verfahren nach den Ansprüchen 12 und 13, **dadurch gekennzeichnet, dass** die Abreinigung der Filterelemente durch Konditionierung der Stäube durch Wassereindüsung im Rückstromwirbler im Bereich der Feststoffzirkulation und gegebenenfalls zusätzliche Konditionierung im Bereich des Wirbelschichteintritts am Konusanfang so verbessert wird, dass die Menge der Abreinigungsdruckluft und/oder der Abreinigungsdruck um mehr als 10%, vorzugsweise mehr als 20%, reduziert wird.

## Claims

1. Flue gas cleaning plant with a reverse-flow cyclone separator (1) through which the gas to be cleaned passes and at least one fabric filter (4) provided with filter elements (5) and connected downstream of the cyclone separator by a gas duct (12), each [such fabric filter (4)] having at least one gas inlet (8), one dean gas duct (22) and one solids bunker (15), and wherein an intermediate store for storing the solids separated in the fabric filter and a solids return line (11) for returning the solids accruing in the intermediate store to the cyclone separator are provided, **characterized in that** a gas inlet (13, 13a) for distributing the dirty gas to the individual filter elements (5) of the fabric filter (4) leads to a flue (20) extending laterally on one side within the fabric filter (4) over the entire length of the fabric filter (4) and over almost the entire height of the filter chamber and open towards the solids bunker (15), and **in that** the solids bunker (15) of the fabric filter (4) also forms the intermediate store (9).

2. Flue gas cleaning plant according to Claim 1, **characterized in that** each gas duct (12) leads down from the cyclone separator (1) via the gas inlet (13) to the end face of the fabric filter (4) turned towards the cyclone separator (1), and the internal baffle plate (18) covers more than 50% of the length of the filter elements (5) (tubes).

3. Flue gas cleaning plant according to Claims 1 or 2, **characterized in that** the width of the gas inlet (13) covers more than 30% and less than 90%, preferably 50% - 80%, of the end-face width of the dirty gas space of the fabric filter (4).

4. Flue gas cleaning plant according to at least one of the preceding claims, **characterized in that** the height of the gas inlet (13) covers more than 40% and less than 90%, preferably 70% - 90%, of the end-face height of the dirty gas space of the fabric filter (4).

5. Flue gas cleaning plant according to at least one of the preceding claims, **characterized in that** the cross-section of the gas inlet (13) is dimensioned so that the maximum dirty gas velocity at the end of the gas inlet (13), or at the point of entry to the fabric filter (4), is between 1 - 10 m/s, preferably 1 - 5 m/s.

6. Flue gas cleaning plant according to at least one of the preceding claims, **characterized in that** the gas inlet (13) reaches partly below filter elements (5) arranged in the fabric filter (4), and **in that** a baffle plate (18) is arranged in the fabric filter (4) with clearance from the gas duct (12) opening towards their end face, the said baffle plate (18) covering the end face of the filter elements (5) turned towards the gas inlet (13) and leaving a sufficient cross-section for inflowing gas clear for the space between the opening of the gas inlet (13) and the baffle plate (18) to form a gravity separator.

7. Flue gas cleaning plant according to at least one of the preceding claims, **characterized in that** the solids bunker (15) has a material discharge outlet (10) limiting its maximum depth of fill.

8. Flue gas cleaning plant according to at least one of the preceding claims, **characterized in that** in the case where the fabric filter (4) consists of a number of separate units, an upwards opening shutter (19) is arranged in the gas duct (12) before the gas inlet (13) and immediately after the cyclone separator (1) and a further shutter device (23) is arranged in the clean gas duct (22) outside the fabric filter (4).

9. Flue gas cleaning plant according to at least one of the preceding claims, **characterized in that** inside the housing of the fabric filter (4) the clean gas duct (22) leads from a clean gas chamber (21) through a dirty gas chamber (24) containing the filter elements (5), and so out of the housing (14).

10. Flue gas cleaning plant according to at least one of the preceding claims, **characterized in that** a plurality of fabric filters (4, 4a) are arranged parallel with each other, with a separate gas duct (12, 12a, 12b, 12c) leading down from the cyclone separator (1) to the gas inlet (13, 13a) of each fabric filter (4).

11. Flue gas cleaning plant according to at least one of the preceding claims, **characterized in that** the cyclone separator has outlets on opposite sides, each with a gas duct (12) leading to a fabric filter (4).

12. Method for controlling a flue gas cleaning plant according to at least one of Claims 1-11 which has a dedusting process that can be activated by an automatic control, **characterized in that** the control is conducted in accordance with various programmable characteristic curves representing the ratio between the total pressure loss of the fabric filter and the flow rate in the fabric filter.

13. Method according to Claim 12, **characterized in that** the fabric filter is operated with a solids pressure loss which decreases with increasing rate of flow.

14. Method according to Claims 12 and 13, **characterized in that** the dedusting of the filter elements is improved by conditioning the dust through injection of water in the cyclone separator in the zone of solids circulation and optionally by additional conditioning in the zone of fluidized bed entry at the start of the cone, so that the quantity of compressed air for dedusting and/or the dedusting pressure is reduced by more than 10%, preferably by more than 20%.

## Revendications

1. Installation d'épuration de gaz d'échappement avec un cyclone (1) traversé par les gaz à épurer et au moins un filtre en tissu (4) présentant des éléments filtrants (5), monté en aval du cyclone par l'intermédiaire d'un conduit de gaz, un conduit de gaz épurés (22) et une trémie de solides (15), et dans laquelle il est prévu un réservoir intermédiaire pour stocker les solides séparés dans le filtre en tissu et un recyclage des solides (11) pour recycler dans le cyclone les solides présents dans le réservoir intermédiaire, **caractérisée en ce que** l'entrée de gaz (13, 13a), pour répartir les gaz bruts sur les différents éléments filtrants (5) du filtre en tissu (4), conduit à une gaine d'écoulement (20) ouverte vers la trémie de solides (15), s'étendant d'un côté dans le filtre en tissu (4), latéralement sur toute la longueur du filtre en tissu (4) et pratiquement sur toute la hauteur du compartiment filtrant, et **en ce que** la trémie de solides (15) du filtre en tissu (4) forme en même temps le réservoir intermédiaire (9).

2. Installation d'épuration de gaz d'échappement selon la revendication 1, **caractérisée en ce que** le conduit de gaz (12) va, à partir du cyclone (1), au moyen de l'entrée de gaz (13) jusque vers le bas vers le côté frontal du filtre en tissu (4) tourné vers le cyclone (1), et la tôle de chicane (18) située à l'intérieur couvre plus de 50% de la longueur des éléments filtrants (5) (manches).

3. Installation d'épuration de gaz d'échappement selon la revendication 1 ou 2, **caractérisée en ce que** la largeur de l'entrée de gaz (13) couvre plus de 30% et moins de 90%, de préférence 50 à 80% de la largeur frontale du compartiment de gaz bruts du filtre en tissu (4) .

4. Installation d'épuration des gaz d'échappement selon au moins l'une des revendications précédentes, **caractérisée en ce que** la hauteur de l'entrée de gaz (13) couvre plus de 40% et moins de 90%, de préférence 70 à 90% de la hauteur frontale du compartiment de gaz bruts du filtre en tissu (4).

5. Installation d'épuration de gaz d'échappement selon au moins l'une des revendications précédentes, **caractérisée en ce que** la section de l'entrée de gaz (13) est dimensionnée de façon que la vitesse maximale des gaz bruts à l'extrémité de l'entrée de gaz (13) ou à l'entrée dans le filtre en tissu (4) soit de 1 à 10 m/s, de préférence de 1 à 5 m/s.

6. Installation d'épuration de gaz d'échappement selon au moins l'une des revendications précédentes, **caractérisée en ce que** l'entrée de gaz (13) arrive en partie jusqu'au-dessous d'éléments filtrants (5) disposés dans le filtre en tissu (4) et qu'une tôle de chicane (18) est disposée dans le filtre en tissu (4), à distance du conduit de gaz (12) débouchant dans sa face frontale, ladite tôle couvrant la face frontale des éléments filtrants (5) tournée vers l'entrée de gaz (13) et libère une section pour le gaz qui arrive de façon que l'espace entre l'embouchure de l'entrée de gaz (13) et la tôle de chicane (18) forme un séparateur par gravité.

7. Installation d'épuration de gaz d'échappement selon l'une des revendications précédentes, **caractérisée en ce que** la trémie de solides (15) a une évacuation de matériau (10) limitant sa hauteur de remplissage maximale.

8. Installation d'épuration de gaz d'échappement selon au moins l'une des revendications précédentes, **caractérisée en ce qu'**un clapet d'arrêt (19) ouvrant vers le haut est disposé dans le conduit de gaz (12) avant l'entrée de gaz (13), directement après le cyclone (1), et un autre organe d'arrêt (23) est disposé dans le conduit de gaz épurés (22) à l'extérieur du filtre en tissu (4), dans le cas où le filtre en tissu (4) comprend plusieurs unités individuelles.

9. Installation d'épuration de gaz selon au moins l'une des revendications précédentes **caractérisée en ce que** le conduit de gaz épurés (22) à l'intérieur du carter du filtre en tissu (4) sort d'un compartiment de gaz épurés (21) à travers un compartiment de gaz bruts présentant les éléments filtrants (5) vers le bas hors du carter (14).

10. Installation d'épuration de gaz selon au moins l'une des revendications précédentes, **caractérisée en ce que** plusieurs filtres en tissu (4, 4a) sont disposés parallèlement les uns aux autres et un conduit de gaz séparé (12, 12a, 12b, 12c) descend du cyclone (1) vers l'entrée de gaz (13, 13a) de chaque filtre en tissu (4).

11. Installation de gaz d'échappement selon au moins l'une des revendications précédentes, **caractérisée en ce que** le cyclone a sur des côtés opposés des sorties avec chacune un conduit de gaz conduisant à un filtre en tissu (4).

12. Procédé pour commander une installation d'épuration de gaz d'échappement selon au moins l'une des revendications 1 à 11, qui présente un dépoussiérage pouvant être activé par une commande automatique, **caractérisé en ce que** la commande s'effectue de manière correspondant à différentes courbes caractéristiques ajustables qui reproduisent le rapport entre la perte de charge totale du filtre en tissu et le débit volumétrique dans le filtre en tissu.

13. Procédé selon la revendication 12, **caractérisé en ce que** le filtre en tissu fonctionne avec une perte de charge de solides qui diminue lorsque le débit volumétrique augmente.

14. Procédé selon les revendications 12 et 13, **caractérisé en ce que** le dépoussiérage des éléments filtrants est amélioré par le conditionnement des poussières par injection d'eau dans le cyclone dans la zone de recyclage des solides et éventuellement par conditionnement supplémentaire dans la zone de l'entrée du lit fluidisé au début du cône, de façon que le débit d'air comprimé de dépoussiérage et/ou la pression de dépoussiérage soit réduit de plus de 10%, de préférence de plus de 20%.
